# EUROPÄISCHE PATENTSCHRIFT

(11) **EP 0 997 260 B1**
(45) Veröffentlichungstag und Bekanntmachung des Hinweises auf die Patenterteilung: **04.08.2004**
(21) Anmeldenummer: 99121380.2
(22) Anmeldetag: 27.10.1999
(51) Int. Cl.: B29C 63/04, F16C 13/00

(54) **Einrichtung zur Ummantelung von Werkstücken**
Device for covering workpieces
Dispositif pour recouvrir des pièces

(30) Priorität: 27.10.1998 DE 19849306
(43) Veröffentlichungstag der Anmeldung: 03.05.2000
(73) Patentinhaber: FRITZ ROBERING GmbH & Co. KG, D-32602 Vlotho-Uffeln (DE)
(72) Erfinder: Salomon, Thomas, 33330 Gütersloh (DE); Grote, Roy, 32549 Bad Oeynhausen (DE)
(74) Vertreter: Schneider, Uwe, Dipl.-Ing.

(56) Entgegenhaltungen:
- EP-A- 0 862 975
- DE-A- 4 232 697
- DE-U- 8 806 277
- FR-A- 2 721 549
- GB-A- 2 309 413

## Beschreibung

Die Erfindung betrifft eine Einrichtung zur Ummantelung von Werkstücken gemäß Oberbegriff des Anspruches 1 sowie ein Verfahren nach dem Oberbegriff des Anspruchs 20.

Die Ummantelung von Werkstücken, z. B. Leisten aus Holzmaterialien oder Kunststoffprofilen mit folien- bzw. furnierartigen Materialien gewinnt aufgrund der hohen Materialersparnis an aufwendigen Trägermaterialien zunehmend an Bedeutung. Hierbei werden die folien- bzw. furnierartigen Ummantelungsmaterialien üblicherweise im Durchlaufverfahren auf die meistens stangenförmigen oder auch unendlich direkt vorextrudierten Trägermaterialien aufgebracht, indem auf das Trägermaterial und/oder das Ummantelungsmaterial ein Kleber od. dgl. aufgebracht wird, der gegebenenfalls durch Temperieren der Trägermaterialien bzw. der Ummantelungsmaterialien zusätzlich aktiviert wird und damit eine kurze Aushärtungszeit erlaubt. Das so vorbereitete Trägermaterial sowie das Ummantelungsmaterial werden dann in speziellen Einrichtungen zur Ummantelung von Werkstücken einander zugeführt und aneinander angepreßt, wobei diese Einrichtungen üblicherweise kalanderartig aufgebaute Maschinen sind, die an einem längserstreckten Maschinenbett, das sich entlang der Durchlaufrichtung des Werkstückes erstreckt, eine Reihe von Gestellen aufweist, an denen Ummantelungswerkzeuge angebracht sind. Derartige Ummantelungswerkzeuge sind üblicherweise im wesentlichen zylindrische Rollenelemente, die auf dem Werkstück abrollen und damit das zwischen Werkstück und Rolle angeordnete, durchlaufende Ummantelungsmaterial an das Werkstück anpressen.

Aufgrund der teilweise sehr komplexen Profilformen sowie aufgrund der nicht in einem Zug beliebig verformbaren Ummantelungsmaterialien wird der gesamte Ummantelungsvorgang in einer teilweise relativ hohen Anzahl von einzelnen Verformungsstufen vorgenommen, die an den Gestellen der Ummantelungseinrichtung nacheinander beim Durchlauf des Werkstückes ausgeführt werden und in der Summe nach einem kompletten Durchlauf des Werkstückes durch alle Gestelle bzw. Ummantelungswerkzeuge eine komplette Ummantelung des Werkstückes ergeben. Hierbei ist es von besonderer Bedeutung, daß die Ummantelungswerkzeuge eine auf den gesamten Ummantelungsvorgang jeweils abzustimmende Stellung relativ zu Werkstück bzw. Ummantelungsmaterial einnehmen, so daß die in jedem Gestell bzw. in der Abfolge der Gestelle benötigte Verformung bzw. Anpressung des Ummantelungsmateriales erreicht wird. Somit ist insbesondere beim Einrichten der Ummantelungseinrichtung auf ein neues Profil ein hoher Einstellaufwand zu leisten, da für jedes der vielen Gestelle und Ummantelungswerkzeuge die jeweils optimale Einstellposition gefunden und gegebenenfalls durch mehrfache Versuche ausprobiert werden muß. Die Umrüstung einer derartigen Ummantelungseinrichtung erfordert somit einen hohen zeitlichen Aufwand, der zusätzlich mit vielen Versuchen und damit einem hohen Ausschuß an nicht korrekt ummantelten Werkstücken einhergeht. Diese hohen Rüstzeiten bedingen gleichzeitig lange Maschinenstillstandszeiten zwischen der jeweiligen Produktion des eingestellten, ummantelten Profiles. Da zusätzlich die Stückzahlen pro gleichartig ummantelten Werkstück immer geringer werden, nimmt der Rüstzeitaufwand an der gesamten möglichen Produktionszeit immer mehr zu, wodurch die Ummantelung der Werkstücke relativ immer unwirtschaftlicher wird.

Handelsübliche Ummantelungseinrichtungen werden bei der Umrüstung von verschiedenen Profilen bzw. der Neueinrichtung eines Profiles von Hand eingestellt, wobei das Ummantelungsergebnis bzw. die zum Einrichten benötigte Zeit sehr stark von der Erfahrung des jeweiligen Maschineneinrichters abhängt. Zur Verminderung der Rüstzeiten ist bei bekannten Einrichtungen der gattungsgemäßen Art vorgeschlagen worden, sogenannte Kassettensätze zu verwenden, bei denen die Ummantelungswerkzeuge für jedes oder zumindestens eine Anzahl von Gestellen für ein bestimmtes, üblicherweise häufig herzustellendes Werkstück einmal eingerichtet werden und dann als komplette Kassette, also als festgelegte räumliche Zuordnung der Ummantelungswerkzeuge, der Ummantelungseinrichtung entnommen werden können und als vorgerüsteter Werkzeugsatz in ein Werkzeugmagazin eingespeichert werden können. Durch Austausch derartiger Werkzeugkassetten kann der Umrüstaufwand hinsichtlich der benötigten Umrüstzeit stark vermindert werden, da beim Umrüsten auf ein anderes Werkstück lediglich die schon vorgerüsteten, in ihrer geometrischen Anordnung schon ausgetesteten Werkzeugsätze in die Ummantelungseinrichtung eingebracht werden müssen. Allerdings ist der Kapitalbindungsaufwand durch eine derartig große Vielzahl von Werkzeugkassetten, die für die hohe Vielzahl unterschiedlicher Profile vorgehalten werden müssen, beträchtlich. Daher wird eine derartige Reduzierung der Umrüstzeit nur für wenige, ausgesprochen häufig und unverändert zu fertigende Profile angewandt.

Es ist weiterhin aus dem DE-GM 88 06 277.5 U1 bekannt, eine Maschine zum Ummanteln von Werkstücken der vorstehend beschriebenen Art derart zu automatisieren, daß die Ummantelungsrollen auf Werkzeugträgern angeordnet werden und die Werkzeugträger in einer horizontalen Ebene senkrecht zur Durchlaufrichtung der Werkstücke verschiebbar an den Gestellen gelagert und über einen Antrieb unabhängig voneinander in dieser Ebene verfahrbar zu gestalten, wobei die Werkzeugträger zusätzlich senkrecht zu der horizontalen Ebene jeweils über einen weiteren Antrieb unabhängig voneinander verfahrbar und beide Antriebe als maschinelle Antriebe ausgebildet sind. Hierdurch werden die Ummantelungsrollen, gegebenenfalls durch entsprechende Programmiereinrichtungen gesteuert, für jedes Gestell innerhalb einer Ebene frei positionierbar angeordnet, die senkrecht zur Durchlaufrichtung der Werkstücke liegt und somit können derartige Werkzeugträger auch beispielsweise durch Teach-in und Abspeichern der bei der Einrichtung als optimal herausgefundenen Positionen erneut aufgerufen werden, wenn beispielsweise ein anderes, schon einmal eingerichtetes Werkstück gefertigt werden soll. Von Nachteil an einer derartigen Einrichtung ist, daß lediglich die translatorischen Einstellungen der Ummantelungswerkzeuge durch die automatisierten Antriebe vorgenommen werden sollen, wohingegen insbesondere bei komplexen Profilen die Anstellung der Ummantelungsrollen relativ zu dem Werkstück auch zusätzliche Verschwenkungen der Ummantelungsrollen und gegebenenfalls Zusatzbewegungen erfordern, um ein befriedigendes und leicht beeinflußbares Ummantelungsverhalten zu erzielen. Derartige Schwenkbewegungen werden bei der Maschine nach der DE-GM 88 06 277.5 durch manuelle Verstellungen realisiert, die daher nur zu einem teilautomatisierten Betrieb der Einrichtung zur Ummantelung ausreicht.

Aus der DE-A1-42 32 697 ist eine Maschine zum Beschichten von Profilen mit Folie bekannt, die neben einer Verstellung der linearen Bewegungsachsen auch eine rein manuell durchzuführende Einstellmöglichkeit der Andruckrollen in ihrer Winkellage ermöglicht.

Aufgabe der vorliegenden Erfindung ist es daher, eine gattungsgemäße Einrichtung zur Ummantelung von Werkstücken bzw. ein Verfahren zum Betrieb einer derartigen Einrichtung derart weiterzubilden, daß ein weitgehend automatisierter und insbesondere hinsichtlich der benötigten Rüstzeiten optimierter Betrieb der Anlage gewährleistet ist und dadurch die Wirtschaftlichkeit der Ummantelungseinrichtung deutlich verbessert wird.

Die Lösung der erfindungsgemäßen Aufgabe ergibt sich aus den kennzeichnenden Merkmalen des Anspruches 1 sowie des Anspruches 20 in Zusammenwirken mit den Merkmalen des jeweiligen Oberbegriffes. Weitere vorteilhafte Ausgestaltungen der Erfindung ergeben sich aus den Unteransprüchen.

Die Erfindung nach Anspruch 1 geht aus von einer Einrichtung zur Ummantelung von Werkstücken aus einem Trägermaterial mit einem folien- oder furnierartigen Ummantelungsmaterial im Durchlaufverfahren, aufweisend ein sich in Durchlaufrichtung der Werkstücke erstreckendes Maschinenbett, eine Anzahl von an dem Maschinenbett in Durchlaufrichtung hintereinander angeordneten und die Werkstücke unterstützenden Transportrollen, sowie in Durchlaufrichtung hintereinander angeordnete Gestelle, an denen Ummantelungswerkzeuge zum Anpressen des Ummantelungsmaterials an die Werkstücke in einer Ebene senkrecht zur Durchlaufrichtung über einen Antrieb unabhängig voneinander verfahrbar angeordnet sind, wobei an mindestens einem Gestell Ummantelungswerkzeuge vorgesehen sind, mit denen jeweils mindestens je zwei zueinander senkrechte, voneinander unabhängige Längsbewegungen in der Ebene senkrecht zur Durchlaufrichtung der Werkstücke durchführbar sind. Eine derartige gattungsgemäße Einrichtung wird dadurch in erfindungsgemäßer Weise weiterentwickelt, daß an mindestens einem Gestell mindestens je eine auch während des Betriebs der Einrichtung automatisch steuerbare, rotatorische Bewegung der Ummantelungswerkzeuge um eine zur Durchlaufrichtung im wesentlichen parallele Achse durchführbar ist, wofür jeweils Schwenk- und Vorspurgetriebe für die Verstellung der Ummantelungswerkzeuge vorgesehen sind, bei denen eine Antriebseinrichtung eine Schwenkung des Ummantelungswerkzeuges um eine zur Durchlaufrichtung eines Werkstückes im wesentlichen parallele Drehachse sowie eine Antriebseinrichtung eine Einstellung einer Vorspur des Ummantelungswerkzeuges ausführt. Hierdurch werden neben den reinen translatorischen Verstellbewegungen der Ummantelungswerkzeuge auch die je nach Profilform unbedingt notwendigen Winkeleinstellungen der Ummantelungswerkzeuge ausgeführt und automatisierbar. Durch die Kombination von translatorischer und mindestens einer rotatorischen Einstellung der Ummantelungswerkzeuge ist jede beliebige Profilform bzw. Einstellung der Ummantelungswerkzeuge für die Herstellung der Profilform erreichbar, so daß insbesondere auch kompliziertere Profile automatisiert gefertigt werden können. Es versteht sich von selbst, daß mehr als zwei translatorische und eine rotatorische Bewegung der Ummantelungswerkzeuge denkbar ist, auch können derartige translatorische und rotatorische Bewegungen an mehr als einem der in Durchlaufrichtung der Werkstücke angeordneten Gestelle vorgesehen werden. Durch die Kombination der Schwenkung sowie der Vorspureinstellung in einem einzigen Getriebe ist es möglich, ein besonders kompakt bauendes und damit nur geringen Platzbedarf aufweisendes Getriebe bereitzustellen, das eine wesentlich größere Verstellbarkeit des Ummantelungswerkzeuges als bei konventionellen hintereinander geschalteten Einzelgetrieben erlaubt.

In einer besonders vorteilhaften Weiterbildung sind je Gestell als Ummantelungswerkzeuge zwei Führungsrollen und zwei Andruckrollen vorgesehen, von denen die Andruckrollen das Ummantelungsmaterial an das Werkstück anpressen und die Führungsrollen Werkstück und/oder Ummantelungsmaterial in der Andruckzone zentrieren. Durch eine derartige Kombination von zwei Führungs- und zwei Andruckrollen ist zum einen durch die Führungsrollen gewährleistet, daß das Werkstück in immer gleichbleibender Weise die Andruckzone der Einrichtung zur Ummantelung durchläuft und damit die Andruckposition für die Andruckrollen, mit denen das Ummantelungsmaterial angepreßt und gegebenenfalls an die Profilform durch Biegen quer zur Durchlaufrichtung angepaßt wird, eine genaue Position zueinander haben. Hierdurch ist das Ummantelungsergebnis von hoher Qualität und gleichbleibender Güte.

In besonders vorteilhafter Ausgestaltung sind die Andruckrollen und/oder die Führungsrollen durch elektrische und/oder pneumatische und/oder hydraulische Antriebe bewegbar. Durch Verwendung einer der genannten Hilfsenergien können alle Bewegungen einer Andruckrolle und/oder Führungsrolle automatisch und mit hoher Andruckkraft gesteuert und beeinflußt werden. Auch Kombinationen unterschiedlicher Hilfsenergien sind in diesem Zusammenhang denkbar.

Die Bewegungseinrichtungen insbesondere für die Andruckrollen sind vorteilhafterweise derart positionierbar und schwenkbar, daß sie von oben oder von unten oder aus jeder Zwischenstellung das Ummantelungsmaterial an das Werkstück andrükken können. Insbesondere bei komplizierten Profilen besteht häufig die Forderung, daß in einem Arbeitsgang nahezu rund um das Profil der Ummantelungsvorgang durch das Ummantelungsmaterial vorgenommen werden kann, wozu es notwendig ist, daß nach einem Aufbringen des Ummantelungsmateriales auf einer Deckfläche des Werkstückes auch auf der gegenüberliegenden Deckfläche das Ummantelungsmaterial angepreßt und damit die Ummantelung vollständig um das Profil herum vorgenommen werden kann. Gerade bei derartigen Rundum-Ummantelungen oder Ummantelungen mit großen Verformungen des Ummantelungsmateriales ist es von Vorteil, wenn die Bewegungseinrichtungen der Andruckrollen so ausgestaltet sind, daß die gleiche Andruckrolle auf beiden gegenüberliegenden Seiten eines Profiles einen Andruckvorgang durchführen kann, insbesondere ohne daß die Andruckrolle von Hand verstellt werden muß.

Für die Qualität der Ummantelung insbesondere bei komplexen Profilen und bestimmten Materialien ist es von großer Wichtigkeit, daß an mindestens einem der Gestelle zusätzlich zu der translatorischen und der mindestens einen rotatorischen Einstellung eine sogenannte Vorspur der Andruckrollen einstellbar ist. Eine derartige Vorspur, die in einer üblicherweise eher kleinen Verschwenkung der Andruckrolle relativ zur Durchlaufrichtung der Werkstücke, aber nicht um die Achse parallel zur Durchlaufrichtung der Werkstück herum erfolgt, wird das Ummantelungsmaterial lokal stärker belastet und hierdurch ein Strecken des Ummantelungsmaterials erreicht, das eine faltenfreie und sich beispielsweise an Kanten des Werkstückes besonders gut anschmiegende Ummantelung des Werkstückes ergibt. Hierzu wird an der erfindungsgemäßen Einrichtung in einer Weiterbildung zumindestens eine weitere Schwenkachse vorgesehen, die eine derartige Schrägstellung des Ummantelungswerkzeuges relativ zur Durchlaufrichtung des Werkstückes erlaubt. Auch eine derartige Bewegungseinrichtung kann in vorteilhafter Ausgestaltung wiederum automatisiert, bewegt und gesteuert werden, so daß gegebenenfalls sogar anhand des Ummantelungsergebnisses, das beispielsweise auch durch Bilderkennungssysteme oder dergleichen erfaßt wird, eine Nachoptimierung der Vorspureinstellung der Andruckrolle vorgenommen werden kann.

Je nach zu ummantelndem Werkstück kann es von Vorteil sein, daß die Einstellung der Vorspur nur bei dem ersten oder einer Anzahl von Gestellen in Durchlaufrichtung vorgesehen ist. Beispielsweise kann es direkt nach Beginn des Anpressens des Ummantelungsmateriales notwendig sein, ein durch die Vorspureinstellung bewirktes Strecken des Ummantelungsmateriales hervorzurufen, so daß nur an dieser Stelle bzw. in wenigen aufeinanderfolgenden Stichen eine Vorspureinstellung überhaupt benötigt wird. Auch ist es denkbar, daß erst während der Abfolge der Ummantelung an bestimmten Stichen des Ummantelungsvorganges eine derartige Vorspur benötigt wird, die dann auch nur dort lokal eingestellt bzw. vorgesehen wird.

Vorteilhaft ist es, wenn die Einstellung der Vorspur eine Verschwenkung der Andruckrolle von mindestens bis zu 3 - 5 ° zuläßt, wobei üblicherweise eher kleine Winkelverstellungen für die Bewirkung der beabsichtigten Materialstreckung oder dergleichen ausreichen.

In einer besonders vorteilhaften Ausgestaltung sind die Gestelle portalmäßig ausgebildet und umgreifen den Raum für den Durchlauf der Werkstücke. Hierdurch ist neben einer besonders stabilen Konstruktion und Lagerung der Bewegungseinrichtungen für die Ummantelungswerkzeuge eine platzsparende und gleichzeitig eine große Varianz von Anstellungsmöglichkeiten gewährleistende Bauform erzielbar.

In weiterer Ausgestaltung sind die Führungs- und Andruckrollen an Verstell- und Schwenkeinrichtungen derart an jedem Gestell angeordnet, daß sie in die Andruckzone an dem Werkstück hineingreifen. Hierbei ist eine Anpassung an unterschiedliche denkbare Werkstückmaße bzw. Schwenkungen der Ummantelungswerkzeuge erzielbar, die insbesondere auch durch die portalartige Bauform erzielt werden.

In weiterer Ausgestaltung ist es denkbar, daß die Gestelle auf dem Maschinenbett entlang der Durchlaufrichtung der Werkstücke verstellbar angeordnet sind. Eine derartige in Durchlaufrichtung verstellbare Anordnung der Gestelle kann insbesondere dann von Vorteil sein, wenn es während eines Umformvorganges des Ummantelungsmateriales günstig ist, die einzelnen Verformungen möglichst schnell während des Durchlaufes hintereinander auszuführen, um ein besonders gutes Materialverhalten des Ummantelungsmateriales zu erreichen. Insbesondere kann dies erforderlich sein, um vor dem Durchlauf eingestellte Temperierungen von Ummantelungsmaterial und/oder Werkstück auszunutzen, so daß beispielsweise im Bereich nach dem ersten Zusammenbringen von Ummantelungsmaterial und Werkstück die Abfolge der Gestelle enger gewählt wird als in den folgenden Stichen der Ummantelung, bei denen das Ummantelungsmaterial schon teilweise oder ganz auf dem Werkstückträger aufliegt.

Hierbei ist es denkbar, daß die Gestelle auf dem Maschinenbett entlang der Durchlaufrichtung der Werkstücke angetrieben positionierbar sind, wobei in vorteilhafter Ausgestaltung der Antrieb der Gestelle durch Lineareinheiten erfolgen kann. Somit kann bei einer derartigen Ausgestaltung die Verstellung der Gestelle ebenfalls automatisiert bewirkt werden, was den Automatisierungsgrad der Maschine erhöht und damit den Rüstzeitaufwand senkt.

Auch ist es denkbar, daß auf dem Maschinenbett eine Kombination von Gestellen mit einstellbar gesteuerten Ummantelungswerkzeugen und Gestellen mit ungesteuerten Ummantelungswerkzeugen hintereinander entlang der Durchlaufrichtung angeordnet sind, wobei derartige ungesteuert angeordnete Ummantelungswerkzeuge vorteilhafterweise manuell verstellbar sind. Ein derartiger Mischbetrieb von gesteuerten und ungesteuerten Gestellen macht es möglich, die Investitionskosten in die erfindungsgemäße Einrichtung zu senken, da immer nur dort eine automatisch einstellbare Einrichtung an dem Gestell vorgesehen wird, wo häufige Verstellvorgänge benötigt werden, hingegen in solchen Bereichen ungesteuerte Gestelle vorgesehen werden, in denen nur wenig Einstellbedarf entsteht. Hierdurch sind ebenfalls teilautomatisierte oder lokal automatisierte Konfigurationen der erfindungsgemäßen Einrichtung möglich.

Eine weitere Automatisierung des Betriebs der erfindungsgemäßen Einrichtung läßt sich dann erreichen, wenn eine Vorrichtung zur Profilerkennung vorgesehen ist, die vor und/oder beim Durchlauf die jeweils zu ummantelnde Form des Werkstückes erkennt und/oder das Ergebnis der Ummantelung oder von einzelnen Phasen der Ummantelung überwacht. Hierdurch wird die Umprogrammierung der Einrichtung ebenfalls automatisch ausgelöst und darüber hinaus kann eine partielle oder alle Ummantelungsstationen umfassende, stichprobenartige oder kontinuierliche Überwachung der Ummantelungsvorganges in der Einrichtung erfolgen, durch die die Qualität der Ummantelung noch einmal verbessert werden kann. Somit kann auf einer erfindungsgemäßen Einrichtung sogar im Werkstückmix gearbeitet werden, bei dem ggf. jedes einzelne Werkstück unterschiedliche Abmessungen oder Querschnitte aufweist. In einer ersten Ausgestaltung kann hierbei die Vorrichtung zur Profilerkennung die Form des Werkstückes optisch einscannen, wie dies mit den Mitteln der Bildverarbeitung grundsätzlich bekannt ist. In anderer Ausgestaltung ist es denkbar, daß die Vorrichtung zur Profilerkennung die Form des Werkstückes mechanisch und/oder optisch punktweise oder abschnittsweise digitalisiert, um anhand von charakteristischen, einfach zu erfassenden Daten die jeweils vorliegende Form des Werkstückes zu bestimmen.

Selbstverständlich ist es in anderer Ausgestaltung der Einrichtung auch möglich, im Rahmen werkstattübergreifender Produktionssteuerungssysteme dafür zu sorgen, daß die die Form des Werkstückes beschreibenden Daten aus einem CAD-System oder dgl. übernehmbar sind.

Die Erfindung betrifft weiterhin ein Verfahren zum Betrieb einer Einrichtung zur Ummantelung von Werkstücken, insbesondere einer Einrichtung gemäß Anspruch 1, nach dem Anspruch 20. Hierbei wird die Steuerung der Antriebe von Verstell- und Schwenkeinrichtungen für die Ummantelungswerkzeuge mittels Achscontrollern vorgenommen, wobei die Achscontroller vorzugsweise über ein Feldbussystem miteinander gekoppelt und über einen zentralen Rechner, beispielsweise in einen Industrie-PC miteinander verbunden sind. Derartige Lösungen mit lokalen Controllern, die immer nur eine beschränkte Aufgabe innerhalb eines Automatisierungssystemes übernehmen, bietet sich aufgrund der Vielzahl der möglichen Automatisierungselemente z. B. an einer erfindungsgemäßen Einrichtung an, wobei die Kopplung beispielsweise über ein Feldbussystem od. dgl. und die Anbindung an einen zentralen Rechner die Handhabung derartiger Automatisierungslösungen sowohl für die Software-Herstellung als auch für die Bedienung stark vereinfachen. Durch derartige Lösungen ist es möglich, beispielsweise alle Bewegungseinrichtungen mit den jeweiligen Achscontrollern von dem zentralen Rechner aus zu steuern, wodurch beispielsweise alle Bewegungsachsen beim Umrüsten der Maschine durch einen einzigen Befehl an den zentralen Rechner für das jeweils neu zu fertigende Werkstück angepaßt werden können und damit der Bedienungsaufwand bzw. Einstellaufwand auf ein Minimum reduziert wird.

Hierzu ist es von besonderem Vorteil, daß bei Inbetriebnahme der Einrichtung eine Referenzpunktfahrt aller Verstell- und Schwenkeinrichtungen und ein Nullstellen der Achsmeßsysteme vorgenommen wird. Jeweils beim Hochfahren der Maschine wird einmal die Stellung aller Verstell- und Schwenkeinrichtungen durch die Referenzpunktfahrt ermittelt und beispielsweise an den zentralen Rechner weitergemeldet, so daß ab diesem Zeitpunkt der zentrale Rechner über die genauen Positionen aller Verstell- und Schwenkeinrichtungen und damit die genauen Positionen der Andruckwerkzeuge verfügt und somit die Genauigkeit der Bearbeitung gewährleistet ist.

Die notwendigen Referenzpunktfahrten können bei Einrichtungen zur Ummantelung mit einer Vielzahl von gesteuerten Verstell- und Schwenkeinrichtungen sehr zeitaufwendig sein und ggf. auch ohne die Gefahr von Kollisionen nicht ausgeführt werden, Deshalb ist es in weiterer Ausgestaltung auch denkbar, daß in dem Achscontroller die aktuellen Positionen der jeweiligen Verstell- und Schwenkeinrichtungen auch nach dem Ausschalten der Versorgungsspannung der Einrichtung zur Ummantelung erhalten bleiben. Somit ist nach einem Wiedereinschalten der Einrichtung zur Ummantelung die sofortige Verfügbarkeit aller Positionen der Verstell- und Schwenkeinrichtungen gewährleistet, ohne aufwendige Referenzpunktfahrten vornehmen zu müssen.

In einer ersten Ausgestaltung kann hierzu der Achscontroller von einer Batterie oder einem Akkumulator oder dgl. gespeist werden, wodurch zumindest die Speicherinhalte, die die jeweiligen dem Achscontroller zugehörigen Stellungen der Verstell- und Schwenkeinrichtungen repräsentieren, erhalten bleiben. In anderer Ausgestaltung kann der Achscontroller vor dem Ausschalten der Versorgungsspannung die Speicherinhalte, die die jeweiligen dem Achscontroller zugehörigen Stellungen der Verstell- und Schwenkeinrichtungen repräsentieren, in einen permanenten Zwischenspeicher, vorzugsweise ein EEPROM oder dgl. speichern und bei einem Wiedereinschalten der Versorgungsspannung von dort wieder einlesen. Ebenfalls ist es in einer anderen Ausgestaltung denkbar, daß der Achscontroller nach dem Ausschalten der Versorgungsspannung der Einrichtung zur Ummantelung weiterhin von einer Standby-Schaltung mit Spannung versorgt wird.

Für die Bedienung insbesondere beim Pogrammieren eines neuen Werkstückes ist es von Vorteil, wenn die Verstellung der Verstell- und Schwenkeinrichtungen über eine manuelle Steuerung, vorteilhafterweise per elektronischem Handrad vorgenommen werden kann. Eine derartige manuelle Verstellung bietet bei der Test- und Einfahrphase der erfindungsgemäßen Einrichtung bei der Umstellung auf neue Werkstücke den Vorteil, daß der Maschinenbediener in ihm grundsätzlich bekannter Weise die Einstellung der Ummantelungswerkzeuge ermitteln und erst dann die besonderen Vorteile der Automatisierung nutzen kann. Hierbei läßt sich beispielsweise durch Verwendung eines elektronischen Handrades gleichzeitig eine besonders starke Vereinfachung der manuellen Einstellung erreichen.

Ein besonderer Vorteil des erfindungsgemäßen Steuerungsverfahren ist es, daß die Verstellung der Verstell- und Schwenkeinrichtungen z. B. beim Wechsel zwischen Werkstücken über Abruf von vorher abgelegten Achspositionen aus dem zentralen Rechner vorgenommen werden kann. Sind beispielsweise nach dem Einfahren der erfindungsgemäßen Einrichtung die genauen Positionen z.B. der Führungs- und Andruckrollen einmal für ein bestimmtes Werkstücke ermittelt, so können diese Einstellungen immer wieder aus dem Speicher des zentralen Rechners abgerufen und über die Achscontroller an die Verstell- und Schwenkeinrichtungen weitergeben werden, so daß für das Umrüsten der Maschine nur die Wahl eines anderen Werkstückes ausreicht, um die entsprechenden Positionen der Schwenk- und Verstelleinrichtungen einzunehmen.

Ebenfalls ist es denkbar, daß das Speichern der Achspositionen der Verstell- und Schwenkeinrichtungen mittels Teach-in und Übernahme der eingestellten Positionen in den zentralen Rechner erfolgt. Hierbei kann durch Einlernen der Positionen und Einstellungen der Verstell- und Schwenkeinrichtungen mittels Teach-in eine an die bisher konventionelle Einrichtung angelehnte Verfahrensweise beibehalten werden, lediglich die Übernahme der erreichten Positionen wird dann mit Hilfe des zentralen Rechners möglich.

Es ist denkbar, daß das Schwenk- und Vorspurgetriebe zwei Antriebe aufweist, die auf koaxial angeordnete Schwenkeinrichtungen einwirken und von denen die erste Schwenkeinrichtung eine hütsenartige Hohlwelle aufweist, die eine Schwenkverstellung des Ummantelungswerkzeuges ausführt und in der eine dazu verdrehbare Halterung des Ummantelungswerkzeuges durch eine weitere Schwenkeinrichtung um eine zur Schwenkachse im wesentlichen senkrechte Achse verdrehbar ist. Hierbei wird die Verschwenkung des Ummantelungswerkzeuges durch die erste Schwenkeinrichtung bewirkt, die die hülsenartige Hohlwelle verdreht, in der eine weitere Welle drehbar angeordnet ist, an der eine Halterung des Ummantelungswerkzeuges angeordnet ist, die im wesentlichen senkrecht zu der Drehachse der Hohlwelle steht und durch die weitere Schwenkeinrichtung zusätzlich verdreht werden kann.

In besonders vorteilhafter Ausgestaltung können die Schwenkeinrichtungen Schnekkenantriebe aufweisen, von denen eine auf die Hohlwelle und eine andere auf die Halterung des Ummantelungswerkzeuges einwirkt. Diese kompakte Bauweise vermindert das Risiko von Kollisionen der verschiedenen Antriebe im Bereich der Andruckzone eines Gestelles, so daß eine weitere Erhöhung der Flexibilität einer erfindungsgemäßen Einrichtung gewährleistet ist.

Eine besonders bevorzugte Ausführungsform der erfindungsgemäßen Einrichtung zur Ummantelung zeigt die Zeichnung.

Es zeigen:
- Figur 1 -: eine Ausführungsform der erfindungsgemäßen Einrichtung mit Ansicht eines typischen Gestellaufbaus für die Bewegung von Antriebs- und Führungsrollen zur Ummantelung eines Werkstückes,
- Figur 2 -: einen Ausschnitt aus der Darstellung gemäß Figur 1, bei der die Führungsrollen zurückgezogen sind und die Andruckrollen ein konisches Profil bearbeiten,
- Figur 3 -: eine weitere Darstellung einer Ummantelung eines Werkstückes mit oberseitig angeordneten Andruckrollen und unterseitig angeordneten Führungsrollen gemäß Ausschnitt aus Figur 1,
- Figur 4 -: eine Draufsicht auf einen Modul einer erfindungsgemäßen Vorrichtung mit vier hintereinander in Durchlaufrichtung angeordneten Gestellen am Maschinenbett der Einrichtung,
- Figur 5 -: eine Detailansicht zur Realisierung der Schwenk- und Vorspureinstellung einer Andruckrolle, die auf ein Werkstück drückt,
- Fig. 6a u.6b -: Längs- und Querschnitt durch ein Schwenk- und Vorspurgetriebe gemäß Figur 5 mit darin angeordneten Funktionsbauteilen,
- Fig. 7a u.7b -: Längs- und Querschnitt durch eine Ausführungsform der erfindungsgemäßen Einrichtung gemäß Figur 1, bei der die Gestelle entlang der Durchlaufrichtung der Profile verstellbar sind.

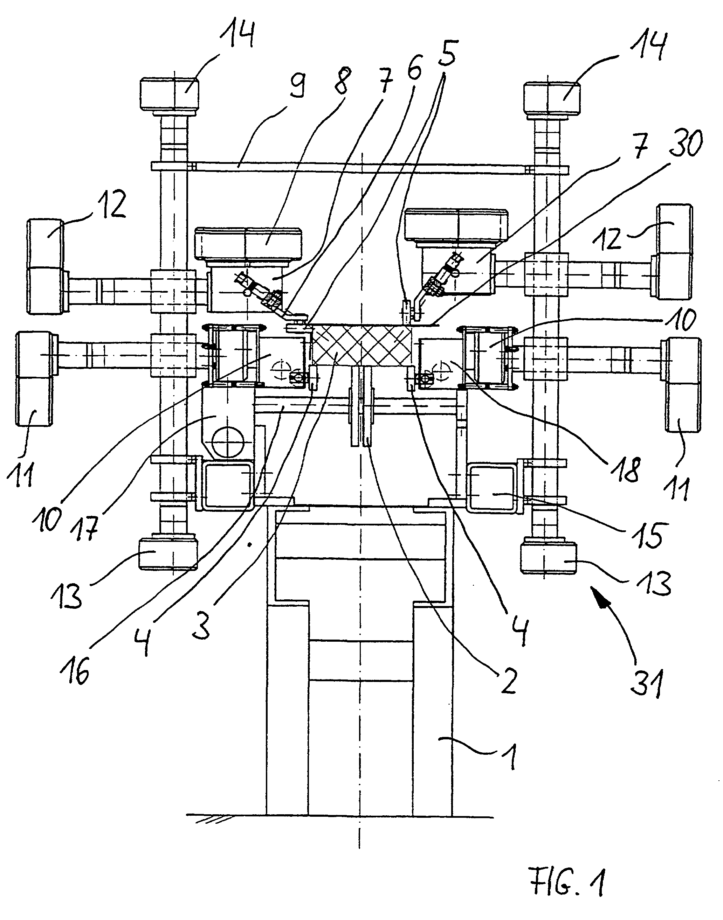

In der Figur 1 ist in einer Gesamtdarstellung ein Gestell 31 einer erfindungsgemäßen Einrichtung zur Ummantelung von Werkstücken 3 dargestellt, wobei die das Gestell 31 bildenden bzw. an dem Gestell 31 angeordneten Bauteile im wesentlichen in einer Ebene senkrecht zur hier aus der Papierebene herauszeigenden Durchlaufrichtung 29 des Werkstückes 3 angeordnet sind. Das Gestell 31 ist eine im wesentlichen portalartig aufgebaute Konfiguration aus Einzelantrieben für die Bewegung der Andruckrollen 5 sowie der Führungsrollen 4, die zur Ummantelung des Werkstückes 3, das auf Tragrollen 2 durch die Einrichtung hindurchläuft, benötigt werden. Die Führungsrollen 4, die in Figur 1 im wesentlichen parallel zur Tragrolle 2 angeordnet sind und sich mit der Bewegung des Werkstückes 3 drehen, dienen vornehmlich zur Abstützung und Führung des Werkstückes 3 bzw. auch des Ummantelungsmateriales 30 beim Durchlauf des Werkstückes 3 durch die Einrichtung. Hingegen dienen die Andruckrollen 5, die in der Darstellung gemäß Figur 1 oberhalb des Werkstückes 3 angeordnet sind, zur Führung und zum Andrücken des Ummantelungsmateriales 30, das hier oberhalb des Werkstückes 3 nur angedeutet ist und zumindestens über Teilbereiche der Außenkontur des Werkstückes 3, diese Außenkontur bedeckend, anzuordnen ist.

Hierzu wird das Material in einer nicht weiter dargestellten, bei dem Fachmann bekannten vorgelagerten Stelle der Einrichtung, beispielsweise von einer Haspel zugeführt, mit Klebstoff od. dgl. beschichtet, gegebenenfalls erwärmt und dann auf das ebenfalls der Andruckzone zugeführte Werkstück 3 aufgepreßt. Das somit zumindestens grob an dem Werkstück 3 positionierte Ummantelungsmaterial 30 muß nun mit Hilfe der Andruckrollen 5 zum Beispiel um Ecken, Radien oder sonstige Teilabschnitte des Werkstückes 3 herumgebogen und dort ebenfalls angepreßt werden, um eine gute Haftung des Ummantelungsmateriales 30 auf dem Werkstück 3 zu erzielen. Hierzu werden in noch später dargestellter Weise eine Anzahl der in Figur 1 dargestellten Gestelle 31 entlang des Maschinenbettes 1 hintereinander angeordnet und übernehmen jeweils Teilabschnitte der Umformung des Ummantelungsmateriales 30 und des Andrückens.

In dem in der Figur 1 dargestellten Gestell 31 drückt eine Andruckrolle 5 von oben auf das Werkstück 3 in der Nähe der rechten Kante des Werkstückes 3, eine weitere Andruckrolle 5 drückt das Ummantelungsmaterial 30 in der Nähe der linken oberen Kante auf die Seitenfläche des Werkstückes 3. Das hier dargestellte Werkstück 3 weist eine besonders einfache, nämlich rechteckige Gestalt auf, typische Profile, die auf erfindungsgemäßen Einrichtungen hergestellt werden, weisen teilweise komplexe Aneinanderfügungen von Radien, Schrägen, Winkeln und sonstigen Formelementen auf.

Für jedes der Gestelle 31 wird in der Abfolge der Ummantelung eine bestimmte Anordnung der Führungsrollen 4 sowie der Ummantelungsrollen 5 benötigt, die bei gleichartigen Werkstücken 3 im wesentlichen unverändert bleiben, jedoch zur Einrichtung der Maschine möglichst schnell einzustellen sein müssen. Zur Einstellung der Position und Lage der Ummantelungsrollen 5 und der Führungsrollen 4 dienen die an dem Gestell 31 bzw. der portalartigen Struktur des Gestelles 31 angeordneten Antriebe 11, 12 13, 14, 7, 18, die in noch näher beschriebener Weise als elektromotorische Antriebe ausgebildet sind und die Führungsrollen 4 sowie die Andruckrollen 5 in horizontaler und vertikaler Richtung innerhalb der Ebene senkrecht zur Durchlaufrichtung 29 verstellen sowie die Andruckrollen 5 und die Führungsrollen 4 um eine Drehachse im wesentlichen parallel zur Durchlaufrichtung 29 der Werkstücke 3 bewegen können. Hierdurch ist gewährleistet, daß die Andruckrollen 5 und die Führungsrollen 4 an jede beliebige Kontur eines Werkstückes 3 in ihrer räumlichen Lage angepaßt werden können und somit eine genaue Anpressung des Ummantelungsmateriales 30 an diese Kontur ermöglichen.

Für jedes der Ummantelungswerkzeuge, hier also der Führungsrollen 4 und der Andruckrollen 5 ist ein gesonderter Antrieb für alle drei derartigen Bewegungsrichtungen vorgesehen. Somit ist beispielsweise für die rechte Andruckrolle 5 ein Hubantrieb 14 sowie ein Horizontalantrieb 12 und ein Schwenkantrieb 7 vorgesehen, mit denen die Andruckrolle 5 horizontal und vertikal verschoben und um eine Achse parallel zur Durchlaufrichtung 29 des Werkstückes 3 gedreht werden kann. Der Aufbau der Antriebe 12, 14 sowie der entsprechenden anderen Antriebe 11, 13 für die weiteren Ummantelungsrollen soll hier nicht weiter beschrieben werden, da es sich hier um konventionelle, beispielsweise durch elektromotorische Antriebe und per Achscontroller gesteuerte Antriebe handeln kann, die beispielsweise über Hubspindeln oder dergleichen die Bewegung von den Motoren 12, 14 auf die Andruckrolle 5 übertragen. Es ist selbstverständlich denkbar, hierzu andere Antriebe wie hydraulische oder pneumatische Antriebe oder auch andere elektrische Antriebskonfigurationen zu wählen, dies steht dem Fachmann mit seiner Kenntnis der Antriebstechnik ohne weiteres zur Verfügung.

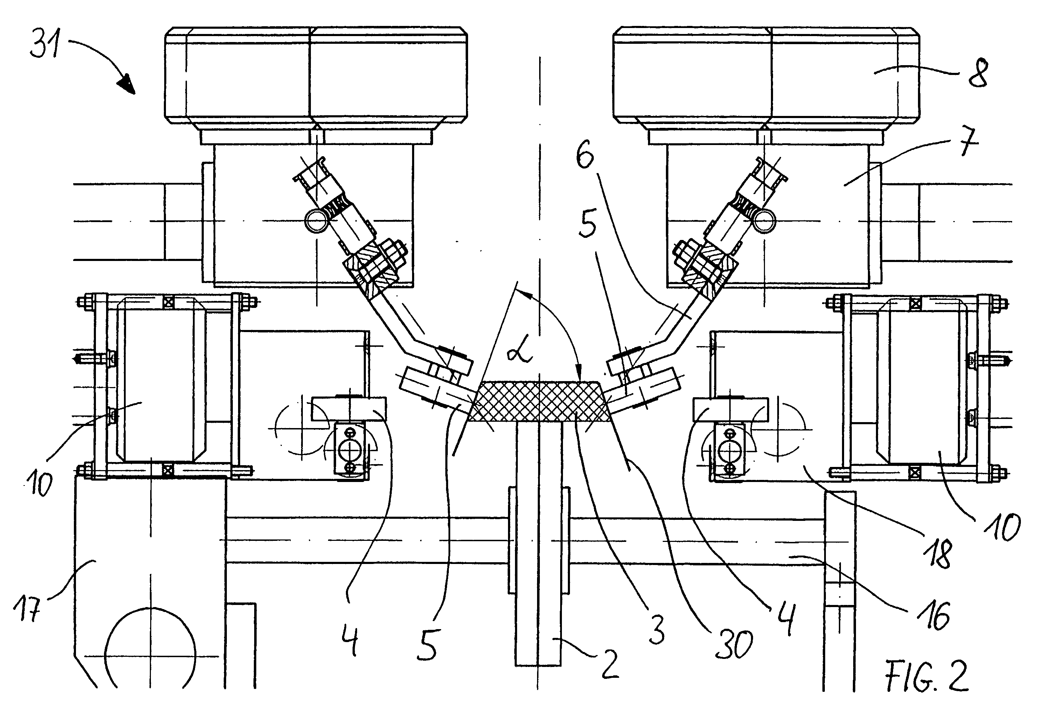

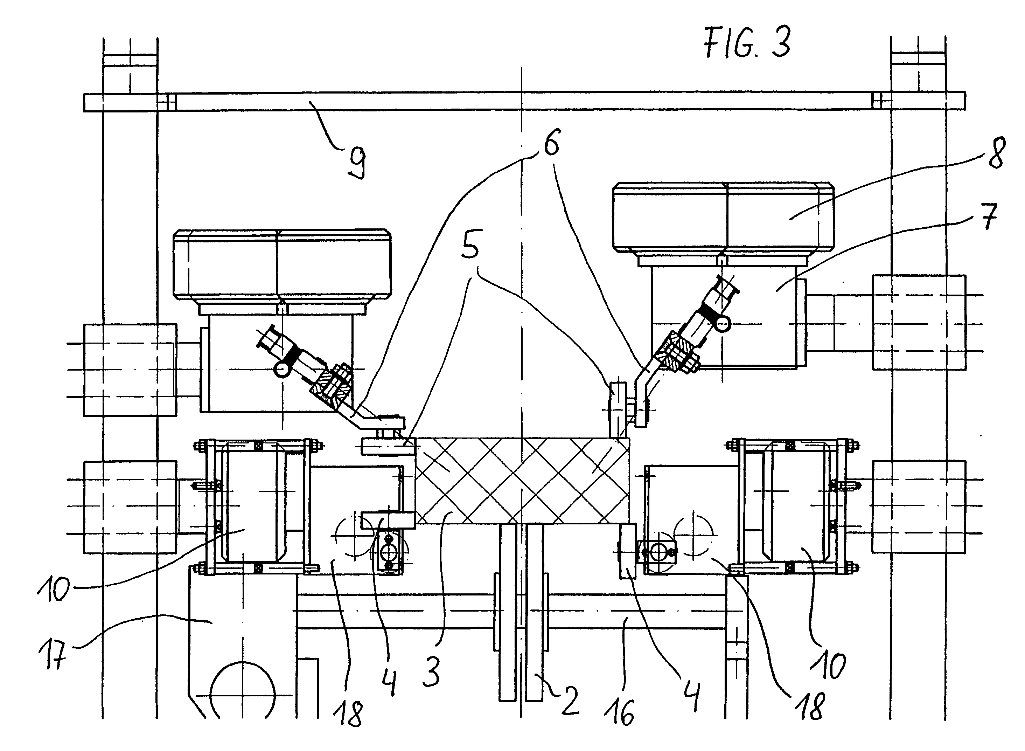

Neben der horizontalen und vertikalen Verstellung der Andruckrollen 5 bzw. Führungsrollen 4 spielt die Drehung der Andruckrollen 5 bzw. Führungsrollen 4 um eine Achse im wesentlichen parallel zur Durchlaufrichtung des Werkstückes 3 eine besondere Rolle, um eine vollautomatisierte Einstellung der erfindungsgemäßen Einrichtung zu gewährleisten. Hierzu ist beispielsweise für die Andruckrollen 5 ein Schwenk- und Vorspurgetriebe 7 vorgesehen, das neben der Verschwenkung um eine Achse parallel zur Durchlaufrichtung 29 des Werkstückes 3 eine weitere sogenannte Vorspureinstellung zu bewirken, die später noch weiter erläutert wird. Eine derartige Vorspureinstellung dient zur lokalen Stauchung bzw. Dehnung des Ummantelungsmateriales 30, die für bestimmte Ummantelungsoperationen von Vorteil ist. Ebenfalls ist ein Schwenkgetriebe 18 für die Führungsrollen 4 vorgesehen, mit denen die Führungsrollen 4 aus der in der Figur 1 dargestellten Lage mit etwa horizontaler Drehachse in eine beispielsweise in der Figur 2 gezeigte Lage mit etwa vertikaler Drehachse gebracht werden können. Durch die gleichzeitige Höhen- und Querverstellung der Führungsrollen 4 können die Führungsrollen 4 sowohl, wie in Figur 1 dargestellt, unterhalb des Werkstückes 3 Stützfunktionen übernehmen, auch können sie, wie beispielsweise in der linken Hälfte der Figur 3 dargestellt, Führungsfunktionen in horizontaler Richtung für das Werkstück 3 übernehmen.

Die Traverse 9, die oberhalb des Arbeitsraumes des Gestelles 31 angeordnet ist, ist mit den Hubantrieben 13, 14 der Andruckrollen 5 bzw. Führungsrollen 4 verbunden und stabilisiert diese Hubantriebe 13, 14 und damit die Gesamtstruktur des Gestelles 31. Hierdurch ist ein besonders steifer Aufbau und nur geringe Abweichungen der Andruckrollen 5 bzw. Führungsrollen 4 realisierbar.

In der Figur 1 nicht näher dargestellt, aber grundsätzlich vorsehbar ist es, daß die hintereinander entlang der Durchlaufrichtung 29 des Werkstückes 3 angeordneten Gestelle 31 zueinander in ihrem in Durchlaufrichtung 29 vorzugebenden Abstand verändert werden können, beispielsweise durch eine Verschiebung entlang einer Verstellschiene 15 beispielsweise mittels eines nicht dargestellten Linearantriebes od. dgl.. Hierdurch können die Abstände der Ummantelungsstationen pro Gestell 31 näher aneinandergelegt werden, sofern dies beispielsweise durch die Prozeßführung des Ummantelns von Vorteil ist.

In der Figur 2 ist in einem Ausschnitt eine andere Stellung der Andruckrollen 5 und Führungsrollen 4 an einer Einrichtung gemäß Figur 1 dargestellt, bei der das Werkstück 3 auf den drehbar angeordneten Tragrollen 2, die um eine Welle 16 gegebenenfalls angetrieben rotieren können, aufliegt und durch die Gestelle 31 hindurchgefördert wird. Das Werkstück 3 gemäß Figur 2 weist einen etwa trapezförmigen Querschnitt auf, wobei das Ummantelungsmaterial 30 auf der kurzen Seite des Trapezes aufgelegt ist und von den Andruckrollen 5 an die abgeschrägten Flächen des Trapezes angelegt wird. Diese beispielsweise mit dem Winkel α bezeichnete Schrägstellung der Andruckrollen 5 wird durch die Funktion der Schwenk- und Vorspurgetriebe 7 bewirkt, die mit dem Halter 6 für die Andruckrollen 5 eine Schwenkbewegung um eine Achse parallel zur Durchlaufrichtung 29 des Werkstückes 3 ausführen. Durch gleichzeitiges Horizontal- und Vertikalverschieben der Andruckrollen 5 kann die Andruckrolle 5 beispielsweise beim Einrichten in die genaue Position gefahren werden, die für das Ummanteln in diesem Gestell 31 der Einrichtung benötigt wird. Diese Stellung wird durch die Antriebe 11, 12, 13, 14 genau eingehalten und kann beispielsweise auch jederzeit wieder angefahren werden, wenn nach der Fertigung eines anderen Werkstückes wieder genau das gleiche Werkstück 3 gefertigt werden soll.

Die Führungsrollen 4 werden bei der hier vorliegenden Konfiguration nicht weiter benötigt, da die Andruckrollen 5 im wesentlichen die Funktion des zentrierten Führens des Werkstückes 3 übernehmen und sind daher in eine Ruhestellung seitlich von dem Werkstück 3 zurückgefahren. Man erkennt hier noch einmal deutlich, daß die Führungsrollen 4 zumindestens um einen Schwenkwinkel von 90° verschwenkt werden können um aus einer Stellung aus einer im wesentlichen vertikalen Drehachse in eine Stellung mit im wesentlichen horizontaler Drehachse wie in Figur 1 gestellt zu werden.

In der Figur 3 ist wiederum in einem Ausschnitt gemäß Figur 1 eine Anstellung der Andruckrollen 5 sowie der Führungsrollen 4 an ein Werkstück 3 aufgezeigt, wobei die rechte Andruckrolle 5 von oben auf das Werkstück 3 drückt und die linke Andruckrolle 5 auf einer Seitenkante das Werkstück 3 ummantelt. Die Führungsrollen 4 führen hierbei das Werkstück 3 in vertikaler und horizontaler Richtung, wobei die rechte Führungsrolle 4 eine Gegenlagerung für die obere rechte Andruckrolle 5 bildet, und die linke Führungsrolle 4 eine seitliche Führung des Werkstückes 3 bewirkt.

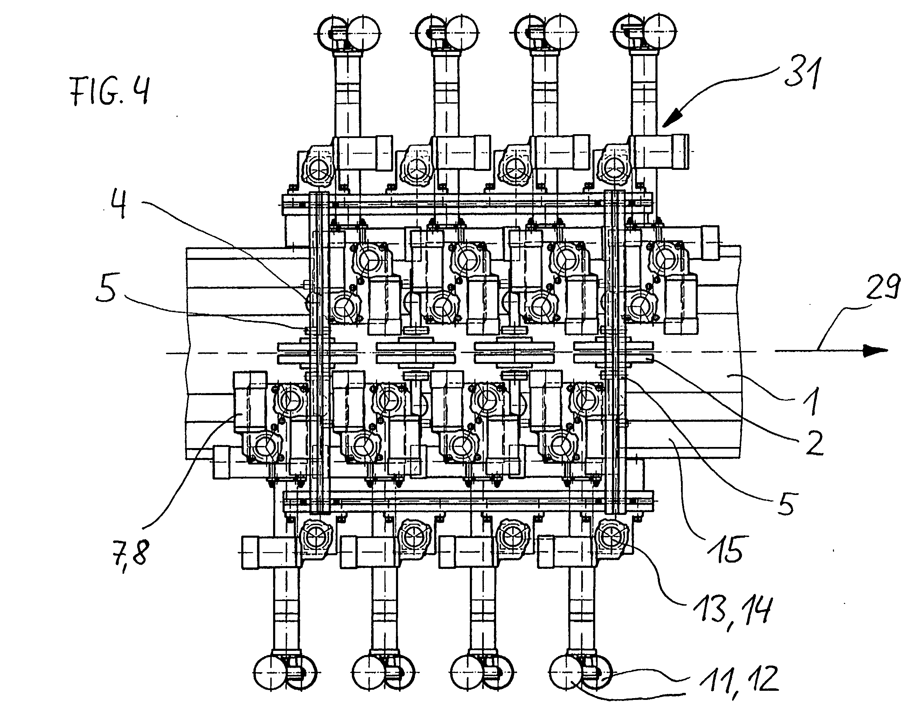

In der Figur 4 ist in einer Draufsicht auf eine Hintereinanderordnung von vier Gestellen 31 einer erfindungsgemäßen Einrichtung zu erkennen, wie die verschiedenen Ummantelungsstationen jedes Gestelles 31 hintereinandergeschaltet sind. In der Mitte ist, ohne daß das Werkstück 3 selbst dargestellt ist, die Aneinanderreihung von insgesamt vier Tragrollen 2 zu sehen, auf denen das Werkstück 3 durch den Ummantelungskanal in Richtung der Durchlaufrichtung 29 läuft, wobei die beispielsweise modulartig in eine Viereranordnung zusammengefaßten Gestelle 31 an dem Maschinenbett 1 hintereinander angeordnet sind. Ebenfalls ist zu erkennen, daß die Andruckrollen 5 im wesentlichen mit einer horizontalen Drehrichtung ausgerichtet sind und die Führungsrollen 4 im wesentlichen vertikale Drehrichtungen aufweisen, weiterhin sind die Antriebe 11, 12, 13, 14, 7, 18 für die Hub- und Querverstellung sowie die Schwenkung von Andruckrollen 5 und Führungsrollen 4 zu erkennen. Eine erfindungsgemäße Einrichtung besteht aus einer Vielzahl derartiger Gestelle 31, wobei die Anzahl der Gestelle 31 und deren Aufeinanderfolge vornehmlich durch die Ummantelungsoperation festgelegt werden.

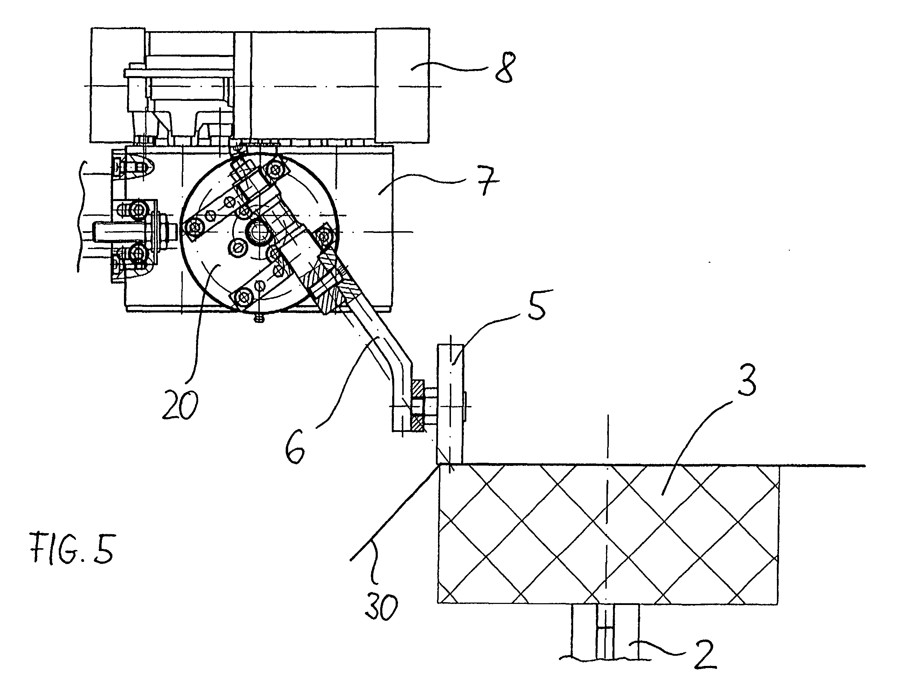

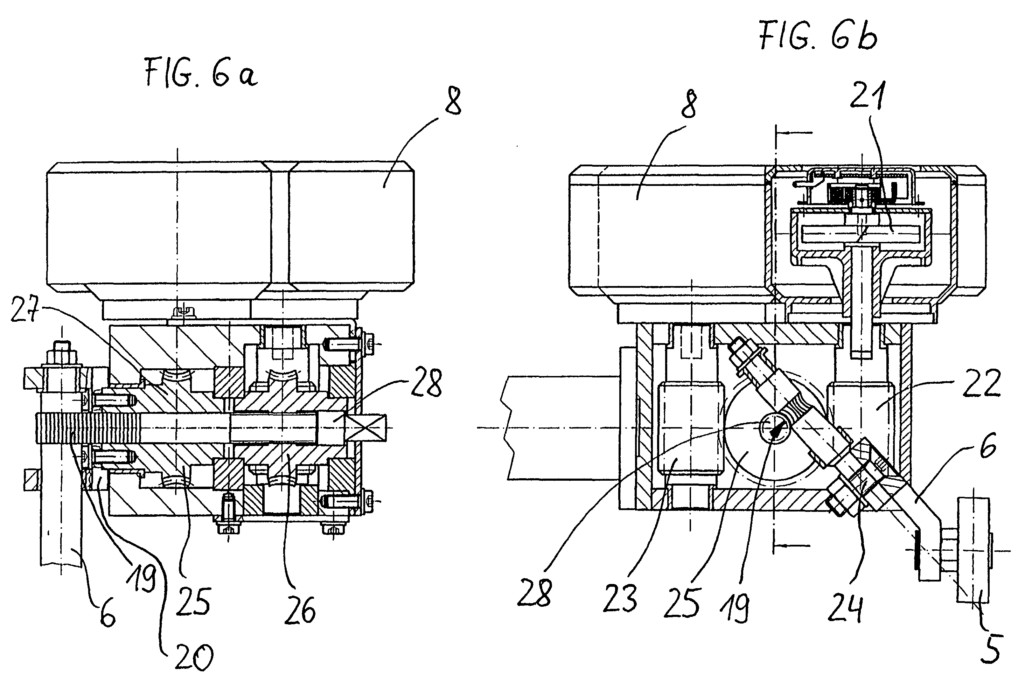

In den Figuren 5 und 6 sind Detailansichten des erfindungsgemäßen Schwenk- und Vorspurgetriebes 7 dargestellt, mit dem die Andruckrolle 5, die an einem Halter 6 drehbar gelagert ist, beispielsweise an der in Figur 5 dargestellten Stellung mit etwa horizontaler Drehachse in einer beliebigen anderen Stellung beispielsweise mit senkrechter Drehachse oder jede beliebige Zwischenstellung gebracht werden kann. Das Werkstück 3, das wiederum auf der Tragrolle 2 aufliegt, wird hierdurch mit einem nur schematisch angedeuteten Ummantelungsmaterial 30 beschichtet, wobei die Andruckrolle 5 gemäß Figur 5 das Ummantelungsmaterial 30 in der linken oberen Ecke des Werkstückes 3 anpreßt. Das Schwenk- und Vorspurgetriebe 7 wird durch zwei Einzelantriebe 8 bzw. 21, hier Antriebe mit Elektromotor, angetrieben, wobei insbesondere in den Figuren 6a und 6b die Verstelleinrichtungen im Inneren des Schwenk- und Vorspurgetriebe 7 zu erkennen sind. Die reine Schwenkbewegung der Andruckrolle 5 wird mit Hilfe eines Schneckengetriebes realisiert, das aus einem Schneckenrad 25 und einer Schnecke 23 besteht und von einem nicht weiter dargestellten Motor 8 angetrieben wird. Die Schnecke 23 verschwenkt hierbei den Flansch 20, an dem der Halter 6 der Andruckrolle 5 befestigt ist, um eine Achse im wesentlichen parallel zur Durchlaufrichtung 29 des Werkstückes 3 ist, so daß die Andruckrolle 5 stufenlos um diese Achse geschwenkt werden kann. Hierdurch und durch die Verschiebebewegungen des Hubantriebes 14 und des Querantriebes 12 kann die Andruckrolle 5 an jede beliebige Stelle und in jedem beliebigen Winkel zu dem Werkstück 3 gestellt werden und somit an jeden Konturabschnitt des Werkstückes 3 das Ummantelungsmaterial 30 andrücken.

Neben dieser reinen Schwenkbewegung ist es aufgrund technologischer Eigenschaften des Ummantelungsmateriales 30 wichtig, daß eine sogenannte Vorspur eingestellt werden kann, mit der das Ummantelungsmaterial 30 lokal gestaucht und damit beispielsweise faltenfrei an das Werkstück 3 angedrückt werden kann. Diese sogenannte Vorspur, die dem aus der Fahrzeugtechnik bekannten Begriff der Vorspur vollkommen entspricht, ist eine leichte, in der Regel nur wenige Winkelgrade betragende Schrägstellung der Andruckrolle 5 relativ zur Durchlaufrichtung 29 des Werkstückes 3, so daß die Andruckrolle 5 eine Kraft quer zur Durchlaufrichtung 29 auf das Ummantelungsmaterial 30 ausübt und somit beispielsweise Faltenwurf od. dgl. verhindert. Diese Vorspureinstellung muß in jeder vertikalen bzw. horizontalen Position und in jeder Schwenkstellung der Andruckrolle 5 möglich sein, wozu in der Ausführung gemäß Figur 6a bzw. 6b zentrisch zu dem als Hohlwelle 27 ausgebildeten Schneckenrad eine ebenfalls mit einem Schneckenantrieb versehene Verstellung des Halters 6 der Andruckrolle 5 erlaubt. Hierzu wird über einen Antrieb 21, beispielsweise einen elektrischen Antrieb, eine Schnecke 22 betätigt, die über eine Zentralwelle 28 eine Verzahnung 19 betätigt, mit der der Halter 6 um eine Achse geschwenkt werden kann, die zumindestens Anteile senkrecht zur Durchlaufrichtung 29 des Werkstückes 3 aufweist. Je nach Gestaltung des Halters 6, insbesondere der Abkröpfung des Halters 6 sowie seiner Anflanschung lassen sich hierdurch unterschiedliche leichte Vorspureinstellungen der Andruckrolle 5 erreichen, die grundsätzlich aus gattungsgemäßen Einrichtungen bekannt sind und dort von Hand eingestellt werden.

Durch die Kapselung beider Getriebe 22, 28, 23, 25, 27 in einem Gehäuse sowie die Verschachtelung der beiden Antriebswellen, also der Hohlwelle 27 und der Zentralwelle 28, ergibt sich eine besonders kompakte Bauform, so daß der Bedarf an Bauraum für das Schwenk- und Vorspurgetriebe 7 nur gering ist und damit eine hohe Flexibilität bei der Einstellung der Andruckrolle 5 besteht.

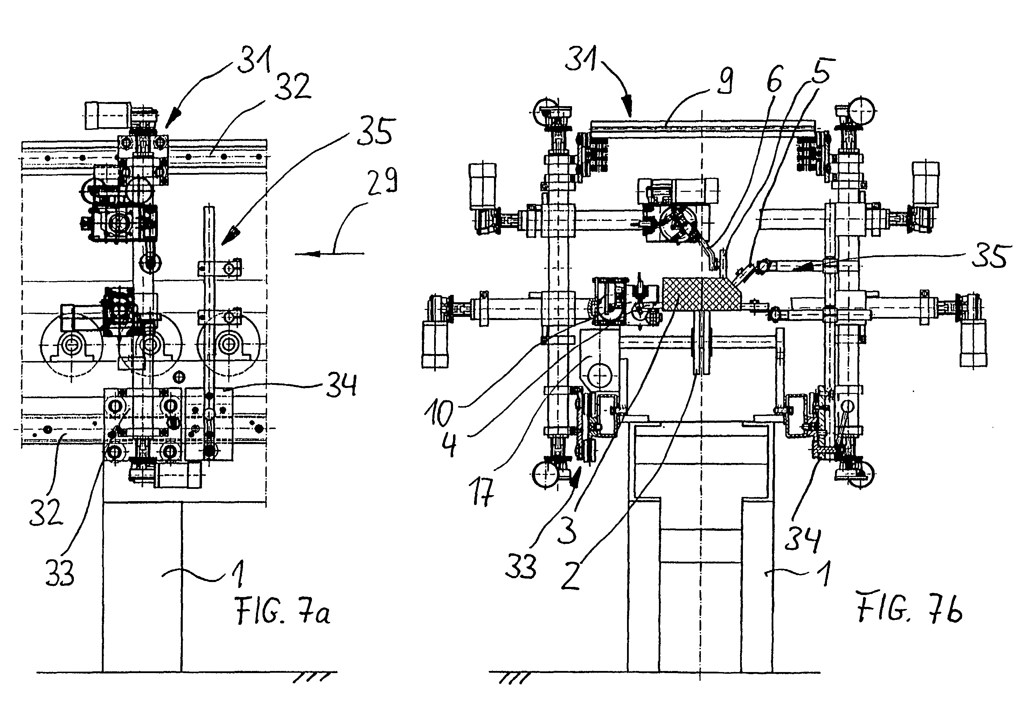

In den Figuren 7a und 7b ist schließlich ein Längs- und Querschnitt durch eine Ausführungsform der erfindungsgemäßen Einrichtung gemäß Figur 1 dargestellt, bei der die Gestelle 31 entlang der Durchlaufrichtung 29 der Werkstücke 3 verstellbar sind. Hierbei sei auf die Beschreibung der vorstehenden Figuren Bezug genommen und lediglich die hier erkennbare Längsverstellung der Gestelle 31 beschrieben. Einzelne oder jedes der Gestelle 31 kann hierbei auf einem Schlitten 33 derart an einer Profilschiene 32 geführt und z.B. motorisch angetrieben bewegbar sein, daß die Abstände zwischen den Gestellen 31 z.B. von der zentralen Steuerungseinrichtung etwa mittels eigener Achscontroller gezielt veränderbar sind. Die Schlitten 33 laufen hierbei auf der Profilschiene 32 in grundsätzlich bekannter Weise linear geführt und werden von nicht weiter dargestellten Antrieben in eine jeweils vorzugebende Position verfahren, die beispielsweise aufgrund technologischer Randbedingungen bei der Ummantelung gefordert werden.

Ebenfalls ist in den Figuren 7a und 7b zu erkennen, daß bei einer erfindungsgemäßen Einrichtung vollautomatisierte Gestelle 31 und manuell verstellbare Gestelle 35 miteinander kombiniert werden können. Hierzu sind derartige manuell verstellbare Gestelle 35 wiederum auf Schlitten 34 geführt und beinhalten die aus dem Stand der Technik bekannten Einstellmöglichkeiten für die Ummantelungswerkzeuge 4, 5.

### Sachnummernliste

- 1 -: Maschinenbett
- 2 -: Transportrolle
- 3 -: Werkstück
- 4 -: Führungsrolle
- 5 -: Andruckrolle
- 6 -: Halter
- 7 -: Schwenk- und Vorspurgetriebe Andruckrolle
- 8 -: Antrieb Schwenk- und Vorspurgetriebe Andruckrolle
- 9 -: Traverse
- 10 -: Getriebe Führungsrolle
- 11 -: Horizontaler Antrieb Führungsrolle
- 12 -: Horizontaler Antrieb Andruckrolle
- 13 -: Vertikaler Antrieb Führungsrolle
- 14 -: Vertikaler Antrieb Andruckrolle
- 15 -: Verstellschiene
- 16 -: Welle Tragrolle
- 17 -: Antrieb Tragrolle
- 18 -: Schwenkantrieb Führungsrolle
- 19 -: Verzahnung
- 20 -: Flansch
- 21 -: Motor
- 22 -: Schnecke
- 23 -: Schnecke
- 24 -: Adapter
- 25 -: Schneckenrad
- 26 -: Schneckenrad
- 27 -: Hohlwelle
- 28 -: Zentralwelle
- 29 -: Durchlaufrichtung
- 30 -: Ummantelungsmaterial
- 31 -: Gestell
- 32 -: Profilschiene
- 33 -: Schlitten
- 34 -: Schlitten
- 35 -: manueller Rollenarm

## Patentansprüche

1. Einrichtung zur Ummantelung von Werkstücken (3) aus einem Trägermaterial mit einem folien- oder furnierartigen Ummantelungsmaterial (30) im Durchlaufverfahren, aufweisend ein sich in Durchlaufrichtung (29) der Werkstücke (3) erstreckendes Maschinenbett (1), eine Anzahl von an dem Maschinenbett (1) in Durchlaufrichtung hintereinander angeordneten und die Werkstücke (3) unterstützenden Transportrollen (2), sowie in Durchlaufrichtung (29) hintereinander angeordnete Gestelle (31), an denen Ummantelungswerkzeuge (4, 5) zum Anpressen des Ummantelungsmaterials (30) an die Werkstücke (3) in einer Ebene senkrecht zur Durchlaufrichtung (29) über einen Antrieb unabhängig voneinander verfahrbar angeordnet sind, wobei an mindestens einem Gestell (31) Ummantelungswerkzeuge (4, 5) vorgesehen sind, mit denen jeweils mindestens je zwei zueinander senkrechte, voneinander unabhängige Längsbewegungen in der Ebene senkrecht zur Durchlaufrichtung (29) der Werkstücke (3) durchführbar sind,
**dadurch gekennzeichnet, daß**
an mindestens einem Gestell (31) mindestens je eine auch während des Betriebs der Einrichtung automatisch steuerbare, rotatorische Bewegung der Ummantelungswerkzeuge (4, 5) um eine zur Durchlaufrichtung (29) im wesentlichen parallele Achse durchführbar ist, wofür jeweils Schwenk- und Vorspurgetriebe (7) für die Verstellung der Ummantelungswerkzeuge vorgesehen sind, bei denen eine Antriebseinrichtung (23, 25) eine Schwenkung des Ummantelungswerkzeuges (5) um eine zur Durchlaufrichtung (29) eines Werkstückes (3) im wesentlichen parallele Drehachse sowie eine Antriebseinrichtung (22, 28, 19) eine Einstellung einer Vorspur des Ummantelungswerkzeuges (5) ausführt.

2. Einrichtung nach Anspruch 1, **dadurch gekennzeichnet, daß** je Gestell (31) als Ummantelungswerkzeuge (4, 5) zwei Führungsrollen (4) und zwei Andruckrollen (5) vorgesehen sind, von denen die Andruckrollen (5) das Ummantelungsmaterial (30) an das Werkstück (3) anpressen und die Führungsrollen (4) Werkstück (3) und/oder Ummantelungsmaterial (30) in der Andruckzone zentrieren.

3. Einrichtung nach einem der Ansprüche 1 oder 2, **dadurch gekennzeichnet, daß** Andruckrollen (5) und/oder Führungsrollen (4) durch elektrische und/oder pneumatische und/oder hydraulische Antriebe (11, 12, 13, 14 7, 18) bewegbar sind.

4. Einrichtung nach einem der vorstehenden Ansprüche, **dadurch gekennzeichnet, daß** die Andruckrollen (5) und/oder die Führungsrollen (4) derart positionierbar und schwenkbar sind, daß sie von oben oder von unten oder aus jeder Zwischenstellung das Ummantelungsmaterial (30) an das Werkstück (3) andrücken.

5. Einrichtung nach einem der vorstehenden Ansprüche, **dadurch gekennzeichnet, daß** an mindestens einem der Gestelle (31) zusätzlich zu der translatorischen und der rotatorischen Einstellung eine Vorspur der Andruckrollen (5) einstellbar ist.

6. Einrichtung nach Anspruch 5, **dadurch gekennzeichnet, daß** die Einstellung der Vorspur eine Beeinflussung des Andrückverhaltens schräg zur Durchlaufrichtung (29) und damit ein Strecken des Ummantelungsmaterials hervorruft.

7. Einrichtung nach einem der Ansprüche 5 oder 6, **dadurch gekennzeichnet, daß** die Einstellung der Vorspur nur bei dem ersten oder einer Anzahl von Gestellen (31) in Durchlaufrichtung (29) vorgesehen ist.

8. Einrichtung nach einem der Ansprüche 5 bis 7, **dadurch gekennzeichnet, daß** die Einstellung der Vorspur eine Verschwenkung der Andruckrolle (5) schräg zur Durchlaufrichtung (29) von mindestens bis zu 3 - 5° zuläßt.

9. Einrichtung nach einem der vorstehenden Ansprüche, **dadurch gekennzeichnet, daß** die Gestelle (31) portalmäßig ausgebildet sind und den Raum für den Durchlauf der Werkstücke (3) umgreifen.

10. Einrichtung nach einem der vorstehenden Ansprüche, **dadurch gekennzeichnet, daß** die Führungsrollen (4) und die Andruckrollen (5) an Verstell- und Schwenkeinrichtungen (11, 12, 13, 14, 7, 18) derart an jedem Gestell (31) angeordnet sind, daß sie in die Andruckzone an dem Werkstück (3) hineingreifen.

11. Einrichtung nach einem der vorstehenden Ansprüche, **dadurch gekennzeichnet, daß** die Gestelle (31) auf dem Maschinenbett (1) entlang der Durchlaufrichtung (29) der Werkstücke (3) verstellbar angeordnet sind.

12. Einrichtung nach Anspruch 11, **dadurch gekennzeichnet, daß** die Gestelle (31) auf dem Maschinenbett (3) entlang der Durchlaufrichtung (29) der Werkstücke (3) angetrieben positionierbar sind.

13. Einrichtung nach einem der Ansprüche 11 oder 12, **dadurch gekennzeichnet, daß** als Antrieb der Gestelle (31) in Durchlaufrichtung (29) durch Lineareinheiten vorgesehen sind.

14. Einrichtung nach einem der vorstehenden Ansprüche, **dadurch gekennzeichnet, daß** auf dem Maschinenbett (1) eine Kombination von Gestellen (31) mit einstellbar gesteuerten Ummantelungsrollen (4, 5) und Gestellen (31) mit ungesteuerten Ummantelungsrollen (4, 5) hintereinander entlang der Durchlaufrichtung (29) angeordnet sind.

15. Einrichtung nach Anspruch 14, **dadurch gekennzeichnet, daß** die ungesteuerten Ummantelungsrollen (4, 5) manuell verstellbar sind.

16. Einrichtung nach einem der vorstehenden Ansprüche, **dadurch gekennzeichnet, daß** eine Vorrichtung zur Profilerkennung vorgesehen ist, die vor und/oder beim Durchlauf die jeweils zu ummantelnde Form des Werkstückes (3) erkennt und/oder das Ergebnis der Ummantelung oder von einzelnen Phasen der Ummantelung überwacht.

17. Einrichtung nach Anspruch 16, **dadurch gekennzeichnet, daß** die Vorrichtung zur Profilerkennung die Form des Werkstückes (3) optisch einscannt.

18. Einrichtung nach Anspruch 16, **dadurch gekennzeichnet, daß** die Vorrichtung zur Profilerkennung die Form des Werkstückes (3) mechanisch und/oder optisch punktweise oder abschnittsweise digitalisiert.

19. Einrichtung nach einem der vorstehenden Ansprüche, **dadurch gekennzeichnet, daß** die die Form des Werkstückes (3) beschreibenden Daten aus einem CAD-System oder dgl. übernehmbar sind.

20. Einrichtung nach Anspruch 1, **dadurch gekennzeichnet, daß** das Schwenk- und Vorspurgetriebe (7) zwei Antriebe (23, 25, 22, 28, 19) aufweist, die auf koaxial angeordnete Schwenkeinrichtungen (28, 27) einwirken und von denen die erste Schwenkeinrichtung ein hülsenartige Hohlwelle (27) aufweist, die eine Schwenkverstellung des Ummantelungswerkzeuges (5) ausführt und in der eine dazu verdrehbare Halterung (6) des Ummantelungswerkzeuges (5) durch eine weitere Schwenkeinrichtung (22, 28, 19) um eine zu der Schwenkachse im wesentlichen senkrechte Achse verdrehbar ist.

21. Einrichtung nach Anspruch 20, **dadurch gekennzeichnet, daß** die Schwenkeinrichtungen (28, 27) Schneckenantriebe (22, 28, 23, 25) aufweisen, von denen eine auf die Hohlwelle (27) und eine auf die Halterung (6) des Ummantelungswerkzeuges einwirkt.

22. Verfahren zum Betrieb einer Einrichtung nach Anspruch 1 zur Ummantelung von Werkstücken (3) aus einem Trägermaterial mit einem folien- oder furnierartigen Ummantelungsmaterial (30) im Durchlaufverfahren,
**dadurch gekennzeichnet, daß**
die Steuerung der Antriebe von Verstell- und Schwenkeinrichtungen (11, 12, 13, 14, 7, 18) für die Ummantelungswerkzeuge (4, 5) mittels Achscontroller vorgenommen wird, wobei die Achscontroller vorzugsweise über ein Feldbussystem od. dgl. miteinander gekoppelt und über einen zentralen Rechner, beispielsweise eine Industrie-PC, miteinander verbunden sind.

23. Verfahren nach Anspruch 22, **dadurch gekennzeichnet, daß** bei jeder Inbetriebnahme der Einrichtung eine Referenzpunktfahrt aller Verstell- und Schwenkeinrichtungen (11, 12, 13, 14, 7, 18) und bei Bedarf ein Nullstellen der Achsmeßsysteme vorgenommen wird.

24. Verfahren nach Anspruch 22, **dadurch gekennzeichnet, daß** in dem Achscontroller die aktuellen Positionen der jeweiligen Verstell- und Schwenkeinrichtungen (11, 12, 13, 14, 7, 18) auch nach dem Ausschalten der Versorgungsspannung der Einrichtung zur Ummantelung erhalten bleiben.

25. Verfahren nach Anspruch 24, **dadurch gekennzeichnet, daß** der Achscontroller von einer Batterie oder einem Akkumulator oder dgl. gespeist wird, wodurch zumindest die Speicherinhalte, die die jeweiligen dem Achscontroller zugehörigen Stellungen der Verstell- und Schwenkeinrichtungen (11, 12, 13, 14, 7, 18) repräsentieren, erhalten bleiben.

26. Verfahren nach einem der Ansprüche 24 oder 25, **dadurch gekennzeichnet, daß** der Achscontroller vor dem Ausschalten der Versorgungsspannung die Speicherinhalte, die die jeweiligen dem Achscontroller zugehörigen Stellungen der Verstell- und Schwenkeinrichtungen (11, 12, 13, 14, 7, 18) repräsentieren, in einen permanenten Zwischenspeicher, vorzugsweise ein EEPROM oder dgl. speichert und bei einem Wiedereinschalten der Versorgungsspannung von dort einliest.

27. Verfahren nach Anspruch 24, **dadurch gekennzeichnet, daß** der Achscontroller nach dem Ausschalten der Versorgungsspannung der Einrichtung zur Ummantelung weiterhin von einer Standby-Schaltung mit Spannung versorgt wird.

28. Verfahren nach einem der Ansprüche 22 bis 27, **dadurch gekennzeichnet, daß** die Verstellung der Verstell- und Schwenkeinrichtungen (11, 12, 13, 14, 7, 18) z.B. beim Programmieren eines neuen Werkstückes (3) über eine manuelle Steuerung vorgenommen wird.

29. Verfahren nach einem der Ansprüche 22 bis 28, **dadurch gekennzeichnet, daß** die Verstellung der Verstell- und Schwenkeinrichtungen (11, 12 ,13, 14, 7, 18) z.B. beim Wechsel zwischen unterschiedlichen Werkstücken (3) über Abruf von vorher abgelegten Achspositionen aus dem zentralen Rechner vorgenommen wird.

30. Verfahren nach einem der Ansprüche 22 bis 29, **dadurch gekennzeichnet, daß** das Speichern von Achspositionen der Verstell- und Schwenkeinrichtungen (11, 12, 13, 14, 7, 18) mittels Teach-In, vorzugsweise per elektronischem Handrad, und Übernahme der eingestellten Positionen in den zentralen Rechner vorgenommen wird.

## Claims

1. Device for the coating of workpieces (3) made of a base material with a coating material (30) formed as a foil or veneer in a continuous operation, showing an engine bed (1) extending in the direction (29) of the movement of the workpieces (3), a number of feed rolls (2) which are ordered at the engine bed (1) in the direction (29) of the movement behind each other and support the workpieces (3) as well as stands (31) arranged in the direction (29) of the movement behind each other, at which coating tools (4, 5) are arranged independently movable to each other by means of an actuation for pressing the coating material (30) onto the workpieces (3) in a plane perpendicular to the direction (29) of the movement, in which at at least one stand (31) coating tools (4, 5) are provided, by which respectively at least each two, independent of each other, perpendicular longitudinal movements can be carried out perpendicular to each other in the plane of the direction (29) of the movement of the workpieces (3),
**characterized in that**
at at least one stand (31) at least each an automatically controllable rotatory movement of the coating tools (4, 5) can be carried out also during the operation of the device around an axle essentially parallel to the direction (29) of movement, for which each slewing gears and toe-in gears (7) are provided for the adjustment of the coating tools (4, 5), at which an actuation device (23, 25) carries out a swinging movement of the coating tool (5) around a swivelling axis essentially parallel to the direction (29) of the movement of a workpiece (3) as well as a actuation device (22, 28, 19) carries out an adjustment of a toe-in of the coating tool (5).

2. Device according to claim 1, **characterized in that** for each stand (31) as coating tools (4, 5) two guiding rollers (4) and two pressure rollers (5) are provided, of which the pressure rollers (5) press the coating material (30) onto the workpiece (3) and the guiding rollers (4) centre workpiece (3) and/or coating material (30) in the pressure zone.

3. Device according to one of the claims 1 or 2, **characterized in that** pressure rollers (5) and/or guiding rollers (4) are movable by means of electrical and/or pneumatic and/or hydraulic actuation devices (11, 12, 13, 14, 7, 18).

4. Device according to one of the preceding claims, **characterized in that** pressure rollers (5) and/or guiding rollers (4) can be positioned and swivelled in such a manner, that they press the coating material (30) onto the workpiece (3) from above or from below or from each intermediate position.

5. Device according to one of the preceding claims, **characterized in that** at at least one of the stands (31) additionally to the translatory and the rotational adjustment a toe-in of the pressure rollers (5) can be adjusted.

6. Device according to claim 5, **characterized in that** the adjustment of the toe-in causes an influence of the pressure behaviour angular to the direction (29) of the movement and therefore a stretching of the coating material (30)

7. Device according to one of the claims 5 or 6, **characterized in that** the adjustment of the toe-in is provided only at the first or at a number of stands (31) in the direction (29) of the movement.

8. Device according to one of the claims 5 to 7, **characterized in that** the adjustment of the toe-in allows a swivelling of the pressure roller (5) angular to the direction (29) of the movement of at least up to 3 - 5°.

9. Device according to one of the preceding claims, **characterized in that** the stands (31) are formed like a portal and encompass the space for the movement of the workpieces (3).

10. Device according to one of the preceding claims, **characterized in that** the guiding rollers (4) and the pressure rollers (5) are arranged at actuation and swivel devices (11, 12, 13, 14, 7, 18) at each stand (31) in such a manner, that they reach in the pressure zone at the workpiece (3).

11. Device according to one of the preceding claims, **characterized in that** the stands (31) are arranged adjustable on the machine bed (1) along the direction (29) of the movement of the workpieces (3).

12. Device according to claim 11, **characterized in that** the stands (31) can be postioned by actuating on the machine bed (1) along the direction (29) of the movement of the workpieces (3).

13. Device according to one of the claims 11 or 12, **characterized in that** as actuation devices of the stands (31) along the direction (29) of the movement linear units are provided.

14. Device according to one of the preceding claims, **characterized in that** on the machine bed (1) a combination of stands (31) with adjustable controlled coating rollers (4, 5) and stands (31) with not controlled coating rollers (4, 5) are arranged along the direction (29) of the movement behind each other.

15. Device according to claim 14, **characterized in that** the not controlled coating rollers (4, 5) are manually adjustable.

16. Device according to one of the preceding claims, **characterized in that** a device for the recognition of profiles is provided, which recognizes before and/or during the passage the respective form of the workpiece (3) to be coated and/or controls the result of the coating or of single phases of the coating.

17. Device according to claim 16, **characterized in that** the device for the recognition of profiles scans the form of the workpiece (3) optically.

18. Device according to claim 16, **characterized in that** the device for the recognition of profiles digitizes the form of the workpiece (3) mechanically and/or optically point-by-point or in sections.

19. Device according to one of the preceding claims, **characterized in that** the data describing the form of the workpiece (3) can be taken over out of a CAD-system or the like.

20. Device according to claim 1, **characterized in that** the slewing and toe-in gear (7) is provided with two actuations (23, 25, 22, 28, 19), which have an effect on concentric arranged swivel devices (28, 27) and of which a first swivel device is provided with a sleeve-like hollow shaft (27), which carries out a swivelling adjustment of the coating tool (5) and in which a relatively twistable mounting (6) of the coating tool (5) is twistable by means of a further swivel device (22, 28, 19) around an axis which is essentially perpendicular to the swivel axis.

21. Device according to claim 20, **characterized in that** the swivel devices (28, 27) are provided with worm gearings (22, 28, 23, 25), of which one of them has an effect on the hollow shaft (27) and one of them on the mounting (6) of the coating tool (5).

22. Procedure for the operation of a device according to claim 1 for the coating of workpieces (3) made of a base material with a coating material (30) formed as a foil or veneer in a continuous operation,
**characterized in that**
the controlling of the actuations of the actuation and swivel devices (11, 12, 13, 14, 7, 18) for the coating tools (4, 5) is carried out by means of a controller for the axis, wherein the controller for the axis are preferably coupled by means of a field bus system or the like and connected to each other by means of a central computer, for example an industrial personal computer.

23. Procedure according to claim 22, **characterized in that** at each initial operation of the device a reference home position movement of all actuation and swivel devices (11, 12, 13, 14, 7, 18) and when required a zero setting of the measuring units of the axis is carried out.

24. Procedure according to claim 22, **characterized in that** in the controller for the axis the actual positions of the respective actuation and swivel devices (11, 12, 13, 14, 7, 18) stay kept also after turning off the distribution voltage of the device for coating.

25. Procedure according to claim 24, **characterized in that** the controller for the axis is fed by a battery or an accumulator, by which at least the memory contents stay kept, which represent the respective positions of the actuation and swivel devices (11, 12, 13, 14, 7, 18) related to the controller for the axis.

26. Procedure according to one of the claims 24 or 25, **characterized in that** the controller for the axis stores before turning off of the distribution voltage those memory contents, which represent the respective positions of the actuation and swivel devices (11, 12, 13, 14, 7, 18) related to the controller for the axis, into a permanent intermediate memory, preferably an EEPROM or the like, and reads these memory contents out of this memory at the time of switching on the distribution voltage.

27. Procedure according to claim 24, **characterized in that** the controller for the axis after turning off of the distribution voltage for the device for coating furthermore is fed by a standby circuit with voltage.

28. Procedure according to one of the claims 22 to 27, **characterized in that** the adjustment of the actuation and swivel devices (11, 12, 13, 14, 7, 18) for example while programming of a new workpiece (3) is carried out by means of a manual control.

29. Procedure according to one of the claims 22 to 28, **characterized in that** the adjustment of the actuation and swivel devices (11, 12, 13, 14, 7, 18) for example while changing between different workpieces (3) is carried out by means of retrieving previously stored axis positions from a central computer.

30. Procedure according to one of the claims 22 to 29, **characterized in that** the storing of axis positions of the actuation and swivel devices (11, 12, 13, 14, 7, 18) is carried out by means of teach-in, preferably by means of an electronic handwheel, and taking over of the adjusted positions into the central computer.

## Revendications

1. Dispositif d'enveloppement en continu de pièces à travailler (3) fait d'un support avec un matériau d'enveloppement (30) en forme de feuille ou de contreplacage, equipé d'un banc de machine (1) qui s'étend sur le passage (29) des pièces à travailler (3), de galets de transport (2), disposés l'un derrière l'autre tout au long du sens de passage sur le banc de machine (1) et supportant les pièces à travailler (3), ainsi que de montants (31) installés l'un derrière l'autre dans le sens de passage (29), sur ces derniers sont installés des outils d'enveloppement (4, 5) permettant de serrer le matériau d'enveloppement (30) contre les pièces à travailler (3) dans un plan perpendiculaire au sens de passage (29) disposés de manière à pouvoir être déplacés individuellement à l'aide d'un entraînement, au moins sur un montant (31) cependant sont prévus des outils d'enveloppement (4, 5) qui permettent chacun de réaliser au moins deux mouvements perpendiculaires indépendant l'un à l'autre, dans un plan perpendiculaire au sens de passage (29) des pièces à travailler (3),
**caractérisé en ce que**
au moins un montant (31) permettant aussi pendant le fonctionnement du dispositif de réaliser un mouvement rotatif et à commande automatique des outils d'enveloppement (4, 5) autour d'un axe disposé essentiellement parallèle au sens de passage (29), a cet effet sont prévus des mécanismes d'orientation et des engrenages de pincement (7) pour le réglage des outils d'enveloppement équipés d'un dispositif d'entraînement (23, 25) qui permet de réaliser le pivotement de l'outil d'enveloppement (5) autour d'un axe de rotation essentiellement parallèle au sens de passage (29) d'une pièce à travailler (3) ainsi que d'un dispositif d'entraînement (22, 28, 19) permettant de réaliser le réglage du pincement de l'outil d'enveloppement (5).

2. Dispositif selon la revendication 1, **caractérisé en ce que** le fait que par montant (31) sont prévus comme outils d'enveloppement (4, 5) deux galets de guidage (4) et deux galets presseurs (5), que les galets presseurs (5) serrent le matériau d'enveloppement (30) contre la pièce à travailler (3) et les galets de guidage (4) centrent la pièce à travailler (3) et / ou le matériau d'enveloppement (30) dans la zone de serrage.

3. Dispositif selon la revendication 1 ou 2, **caractérisé en ce que** la mobilité des galets presseurs (5) et / ou des galets de guidage (4) à l'aide d'entraînements électrique et/ou pneumatique et/ou hydraulique (11, 12, 13, 14, 7, 18).

4. Dispositif selon l'une des revendications précédentes, **caractérisé en ce que** la possibilité de positionner et de pivoter les galets presseurs (5) et / ou les galets de guidage (4) de manière à ce qu'ils serrent d'en haut ou d'en bas ou de toute position intermédiaire le matériau d'enveloppement (30) contre la pièce à travailler (3).

5. Dispositif selon l'une des revendications précédentes, **caractérisé en ce que** le fait qu'on puisse régler au moins sur un montant (31) le pincement des galets presseurs (5) en plus des réglages translatoire et rotatoire.

6. Dispositif selon la revendication 5, **caractérisé en ce que** le fait que le réglage du pincement influence le serrage en biais au sens de passage (29) et entraîne ainsi un étirement du matériau d'enveloppement.

7. Dispositif selon la revendication 5 ou 6, **caractérisé en ce que** le fait que le réglage du pincement ne soit prévu que pour le premier montant ou un nombre de montants (31) dans le sens de passage (29).

8. Dispositif selon la revendication 5 à 7, **caractérisé en ce que** le fait que le réglage du pincement permette un balayage horizontal du galet presseur (5) de façon oblique au sens de passage (29) d'au moins 3 à 5°.

9. Dispositif selon l'une des revendications précédentes, **caractérisé en ce que** les montants (31) qui forment un portique et enveloppent l'espace pour le passage des pièces à travailler (3).

10. Dispositif selon l'une des revendications précédentes, **caractérisé en ce que** les galets de guidage (4) et les galets presseurs (5) sur les dispositifs de réglage et de pivotement (11, 12, 13, 14, 7, 18) disposés sur chaque montant (31) de manière à ce qu'ils pénètrent dans la zone de serrage de la pièce à travailler (3).

11. Dispositif selon l'une des revendications précédentes, **caractérisé en ce que** le fait que les montants (31) sur le banc de machine (1) tout au long du sens de passage (29) des pièces à travailler (3) soient disposés de manière mobile.

12. Dispositif selon la revendication 11, **caractérisé en ce que** le fait que les montants (31 ) sur le banc de machine (3) tout au long du sens de passage (29) des pièces à travailler (3) puissent être positionnés à l'aide d'un entraînement.

13. Dispositif selon la revendication 11 ou 12, **caractérisé en ce que** le fait que des unités linéaires soient prévues comme entraînement des montants (31) dans le sens de passage (29).

14. Dispositif selon l'une des revendications précédentes, **caractérisé en ce que** une combinaison de montants (31) avec des galets d'enveloppement à commande réglable (4, 5) et de montants (31) avec des galets d'enveloppement non commandés (4, 5), disposés l'un après l'autre tout au long du sens de passage (29).

15. Dispositif selon la revendication 14, **caractérisé en ce que** la possibilité de réglage manuel des galets d'enveloppement non commandés (4, 5).

16. Dispositif selon l'une des revendications précédentes, **caractérisé en ce que** un dispositif de reconnaissance de profil prévu pour reconnaître avant et / ou pendant le passage la forme de la pièce (3) à envelopper et / ou pour surveiller le résultat de l'enveloppement ou des différentes phases de l'enveloppement.

17. Dispositif selon la revendication 16, **caractérisé en ce que** le balayage optique par scanner de la forme de la pièce à travailler (3) à l'aide du dispositif de reconnaissance du profil.

18. Dispositif selon la revendication 16, **caractérisé en ce que** le dispositif de reconnaissance du profil permettant une numérisation de la forme de la pièce à travailler (3) mécanique et / ou optique point par point ou par lots.

19. Dispositif selon l'une des revendications précédentes, **caractérisé en ce que** le fait que les données décrivant la forme de la pièce à travailler (3) puissent être transférées d'un système CAO ou semblable.

20. Dispositif selon la revendication 1, **caractérisé en ce que** le fait que le mécanisme d'orientation et de pincement (7) dispose de deux entraînements (23, 25, 22, 28, 19) agissant sur des dispositifs d'orientation disposés coaxialement (28, 27) et le premier dispositif d'orientation dispose d'un arbre creux en forme de manchon (27) qui effectue un réglage d'orientation de l'outil d'enveloppement (5) et dans lequel un support (6) de l'outil d'enveloppement (5) pouvant pivoter à l'aide d'un autre dispositif d'orientation (22, 28, 19) autour d'un axe essentiellement perpendiculaire à l'axe d'orientation.

21. Dispositif selon la revendication 29, **caractérisé en ce que** le fait que les dispositifs d'orientation (28, 27) disposent de transmissions à vis sans fin (22, 28, 23, 25) dont l'une agit sur l'arbre creux (27) et l'autre sur le support (6) de l'outil d'enveloppement.

22. Procédé pour le fonctionnement d'un dispositif d'enveloppement en continu de pièces à travailler (3) fait d'un support avec un matériau d'enveloppement (30) en forme de feuille ou de contreplacage,
**caractérisé en ce que**
le fait que la commande des entraînements des dispositifs de réglage et d'orientation (11, 12, 13, 14, 7, 18) pour les outils d'enveloppement (4, 5) soit réalisée à l'aide de contrôleurs d'axes qui sont couplés de préférence au moyen d'un système de bus de champ ou semblable et connectés au moyen d'un ordinateur central, par exemple un PC industriel.

23. Procédé selon la revendication 20, **caractérisé en ce que** le fait qu'à chaque mise en service du dispositif soit réalisée une course des points de référence de tous les dispositifs de réglage et d'orientation (11, 12, 13, 14, 7, 18) et, le cas échéant, une remise à zéro des systèmes de mesure des axes.

24. Procédé selon la revendication 20, **caractérisé en ce que** le fait que les positions actuelles des dispositifs de réglage et d'orientation (11,12, 13, 14, 7, 18) soient conservées dans le contrôleur d'axes même après coupure de la tension d'alimentation du dispositif d'enveloppement.

25. Procédé selon la revendication 22, **caractérisé en ce que** le fait que le contrôleur d'axes soit alimenté par une batterie ou un accumulateur permettant de conserver au moins les contenus de mémoire qui représentent les positions des dispositifs de réglage et d'orientation (11, 12, 13, 14, 7, 18) correspondant aux différents contrôleurs d'axes.

26. Procédé selon la revendication 22 ou 23, **caractérisé en ce que** le fait qu'avant la coupure de la tension d'alimentation le contrôleur d'axes enregistre dans une mémoire intermédiaire permanent, de préférence un EEPROM ou semblable, les contenus de mémoire qui représentent les positions des dispositifs de réglage et d'orientation (11, 12, 13, 14, 7, 18) correspondant aux différents contrôleurs d'axes.

27. Procédé selon la revendication 22, **caractérisé en ce que** le fait que le contrôleur d'axes continue à être alimenté en courant par un circuit en mode de veille après la coupure de la tension d'alimentation du dispositif d'enveloppement.

28. Procédé selon l'une des revendications 20 à 25, **caractérisé en ce que** le fait que le réglage des dispositifs de réglage et d'orientation (11, 12, 13, 14, 7, 18) soit effectué au moyen d'une commande manuelle, p. ex. lors de la programmation d'une nouvelle pièce à travailler (3).

29. Procédé selon l'une des revendications 20 à 26, **caractérisé en ce que** le fait que le réglage des dispositifs de réglage et d'orientation (11, 12, 13, 14, 7, 18) soit effectué au moyen d'un appel de l'ordinateur central des positions d'axes enregistrées auparavant.

30. Procédé selon l'une des revendications 20 à 27, **caractérisé en ce que** le fait que l'enregistrement des positions d'axes des dispositifs de réglage et d'orientation (11, 12, 13, 14, 7, 18) soit effectué au moyen de Teach-In, de préférence à l'aide d'une roue à main électronique, et les positions réglées soient reprises dans l'ordinateur central.
